# EUROPEAN PATENT SPECIFICATION

(11) **EP 1 015 187 B1**
(45) Date of publication and mention of the grant of the patent: **07.08.2002**
(21) Application number: 98917932.0
(22) Date of filing: 22.04.1998
(51) Int. Cl.: B25B 23/14, B23P 19/06, B25B 23/151

(54) **PROCESS FOR TIGHTENING SCREW JOINTS**
VERFAHREN ZUM SPANNEN VON SCHRAUBVERBINDUNGEN
PROCEDE DE SERRAGE DE JOINTS A VIS

(30) Priority: 22.04.1997 SE 9701499
(43) Date of publication of application: 05.07.2000
(73) Proprietor: ATLAS COPCO TOOLS AB, 105 23 Stockholm (SE)
(72) Inventor: GILES, Martin, Eric, S-135 34 Tyresö (SE); HANSSON, Gunnar, Christer, S-114 59 Stockholm (SE); STRÖMBECK, Jan, Paul, S-117 67 Stockholm (SE)
(74) Representative: Pantzar, Tord
(86) International application number: SE9800727
(87) International publication number: WO9847665

(56) References cited:
- DE-A- 2 558 251
- GB-A- 2 283 112
- SE-B- 399 376
- SE-B- 468 707
- PATENT ABSTRACTS OF JAPAN, Vol. 14, No. 212, (M-969); & JP,A,02 048 140 (SANYO MACH WORKS LTD) 16 February 1990.

## Description

The invention concerns a method for tightening screw joints up to a predetermined pretension level.

In particular, the invention is directed to a process for tightening screw joints by means of power tool having a torque delivering output shaft and being connected to a programmable operation control unit by which the rotation speed of said output shaft is adjustable, and the process includes a primary tightening phase performed at one or more substantially constant speed levels and a final tightening phase performed at a variable rotation speed having an average which is typically lower than the average of the speed levels of the primary tightening phase.

A problem concerned with screw joint tightening is to combine a desireable short process time with a high accuracy, i.e low scattering as far as the obtained final pretension level is concerned. Particularly, this is a problem when tightening varying types of joints, because so called stiff joints, i.e. joints having a steep torque growth per unit angle of rotation has a tendency to be overtightened due to a very abrupt arrival at the desired pretension level, whereas so called soft joints generate a slowly growing torque resistance and arrive at the desired pretension level after a relatively long retardation period. The basic problem is that the tightening tool is not able to discontinue its torque application on the joint quickly enough to avoid overtightening at stiff joints.

An obvious way to reduce scattering and avoid overtightening of stiff joints is to reduce the rotation speed of the tightening tool such that the target pretension level is always reached at a lower speed and with a lower kinetic energy stored in the rotating parts of the tool. Then the tightening tool is able to stop in time to avoid overtightening. A general reduction of the operation speed of the tightening tool might have a positive effect on the accuracy and scattering of the obtained final pretension level. However, a low overall speed is disadvantageous in that the tightening process would be unacceptably slow, in particular at soft joints where the torque growth per unit angle of rotation is low.

One previously suggested method for obtaining a quick yet accurate tightening process, no matter the type of screw joint, is described in US Patent No. 5,245,747.

This prior art method contains a pretensioning step in which the rotation speed of the tightening tool is successively increased from zero to a predetermined maximum level. The relatively low speed at the beginning of the pretension step is intended to prevent overtightening of stiff joints. However, this succesive speed increase has a predetermined rate and is not adapted to the actual screw joint characteristic. This means that, even if the speed is successively increased toward the end of the process, the tightening process as a whole will be unnecessarily slow for soft joints.

In general, prior art methods utilize torque threshold and/or time to provide a sufficient speed reduction before the shut-off point in order to control overshoot caused by inertia and/or occurring sampling intervals.

These strategies have in common that they are based on the assumption that the joints will have a certain behaviour - Housually a linear torque increase over time - and that the speed change is based on what is anticipated to happen later on. Should, however, the joint behave in a non-linear fashion, unexpected results may occur.

For instance, the method of the above mentioned US Patent No. 5,245,747 is described in connection with three screw joint examples having different torque rates, and the method is shown to have a compensatory effect on the overshoot to be expected at the stiffer joints. However, all three joints have linear torque rates, which means that the method is intended to control overtightening of such ideal joints where the torque rate characteristic is assumed to be linear all the way up to the target level. Should instead this method be utilized on a joint having a non-linear torque rate, for instance a torque rate that is low during the initial tightening stage and high at the end of the process, the high end speed would cause a substantial torque overshoot.

The disadvantages of this prior art method is overcome by the method according to the invention as it is defined in the claims.

Alternative examples of the invention are illustrated in the diagrams shown on the accompanying drawings wherein:
Fig. 1 shows a diagram illustrating a single-step tightening process according to the invention.
Fig. 2 shows a diagram illustrating a two-step tightening process according to the invention.
Fig. 3 shows a diagram illustrating four alternative speed reduction strategies during the final tightening phase, one of which belongs to prior art.
Fig. 4 shows a diagram illustrating the different tightening phase durations for the four alternative speed reduction strategies.
Fig. 5 shows a diagram illustrating speed adjustment at a part-relaxing screw joint.
Fig. 6 shows schematically a power tool with an operation control unit for carrying out the process according to the invention.

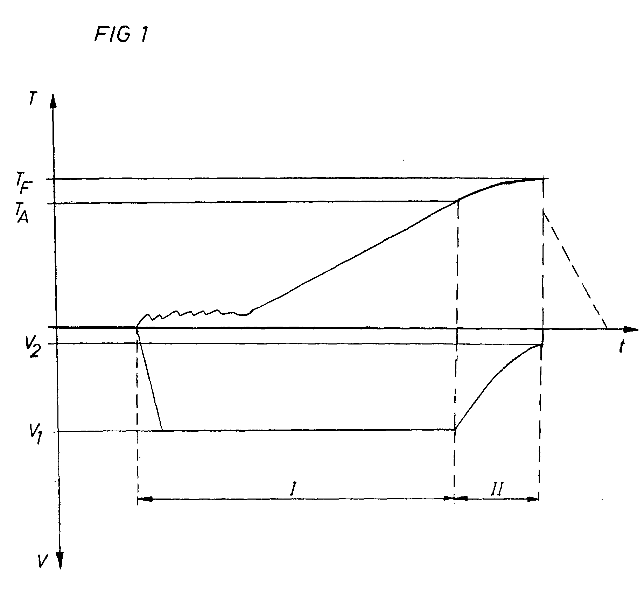

The screw joint tightening process illustrated in Fig. 1 comprises a primary tightening phase I) which is performed at a relatively high speed v₁, and a final tightening phase II) in which the rotation speed is successively reduced from the primary tightening phase speed v₁ to a relatively low final speed v₂.
The primary tightening phase I) includes a running down part and a pretensioning part, wherein the screw joint is tightened up to a shift torque level T_{A} which in practical applications is selecetable in the range of 60-80% of the target torque level T_{F}. Thereafter, the tightening process is completed at a successively reduced rotation speed to the target torque level T_{F} where the speed has become v₂ as intended.

In this example, the rotation speed v is reduced by a regressively lower rate, which means that the speed reduction is steepest at the beginning and becomes successively less steep towards the shut-off point. This speed reduction is controlled by an algorithm which is using torque as a parameter for executing the speed control. In particular, this algorithm controls continuously the speed reduction in response to the relationship between the actual instantaneous transferred torque T and the target torque level T_{F}.

In this case, the speed at the target torque level T_{F} is the predetermined variable as is the initial first tightening phase speed v₁. The control algorithm uses torque information obtained from the motor drive system or from a torque transducer to continuously adapt the rotation speed of the motor such that the target torque level T_{F} is readched at a predetermined speed v₂ without wasting any time running at this low speed v₂ during more than a fraction of the cycle time.

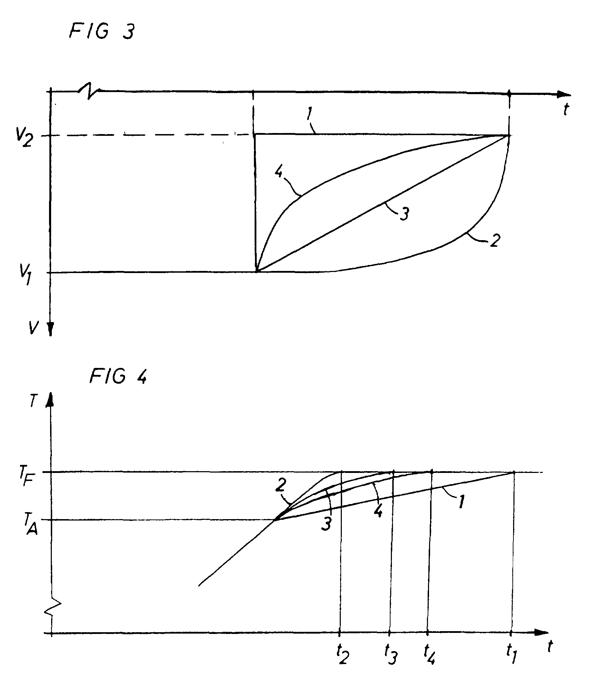

In Fig. 3, there is illustrated four different strategies for reducing the rotation speed during the final tightening phase II) for arriving at the target torque level T_{F} at a predetermined low speed v₂. The common aim of all of these strategies is to reduce the speed so as to limit inertial torque overshoot at the target torque level.

Strategy 1), however, belongs to prior art and means that the speed is reduced in a single step directly from the first running-down speed level v₁ to the intended final speed level v₂ as a preselected shift torque level T_{A} is reached. This means that the entire final tightening phase II) is performed at a low speed, and a lot of time is wasted.

Strategy 2) means that the speed is reduced progressively steeper as the actual torque approaches the target torque level, i.e. with a growing steepness. This means that the speed is upheld as long as possible to reduce the cycle time. However, this very steep speed reduction at the end of the final tightening phase II) makes the system very sensitive to torque rate variations between different joints. There may arrise problems to avoid torque overshoot at very stiff joints, i.e. joints having a very steep torque growth per angle of rotation.

It is important to keep in mind that the influence of rotation speed upon inertial contribution to the delivered torque is square related.

Strategy 3) means that the rotation speed is reduced linearly, i.e. in direct proportion to the difference between the target torque T_{F} and the actual torque T. Strategy 4) is the one illustrated and described above in connection with the process illustrated in Fig.1 and means that the rotation speed is low during a longer interval before reaching the target torque level as compared to the linear strategy 3). This means just a little slower process but also that the system is less sensitive to torque rate variations between different joints. Put together, this means that a safer overshoot control is obtained substantially without causing any longer cycle time.

As illustrated in Fig.4, the time intervals spent by the four alternative speed reduction strategies to reach the target torque level differs a lot. The previously known constant speed alternative 1) takes the longest time and causes an undesireable long cycle time. The process is not completed until t₁.

Strategy 2) on the other hand, results in a very fast process ending at t₂ where the target torque is reached.

Strategies 3) and 4) are both faster than strategy 1) but slower than strategy 2). Strategy 4) in particular, combines a safe tightening process as regards the risk for inertial overshoot with a reasonable short final tightening phase.

From the ergonomic point of view, speed reduction in accordance with the invention results in a lower reaction force exposure on the operator, since the human muscular control system prefers smooth load changes to abrupt ones. This means that the speed reduction strategies comprised in the concept of this invention also give a favourable reaction torque characteristic to be handled by the operator. From this point of view, it is apparent that the prior art strategy 1) is less favourable in that it contains a knee in the torque growth characteristic dM/dt caused by the sudden speed change at the shift torque level T_{A}. This causes a discontinuity in the reaction force which is awkward and tiresome for the operator to cope with.

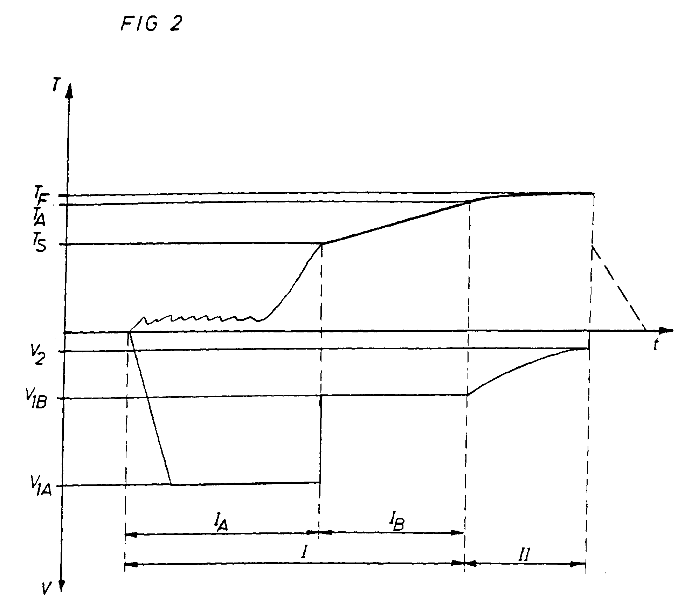

The tightening process illustrated in the diagram in Fig.2 comprises a primary tightening phase I) which is divided into two steps I_{A} and I_{B} performed at different rotation speed levels. Accordingly, the first step I_{A} is performed at a relatively high speed v_{1A} and ends as the delivered torque reaches a snug level T_{S}. From that point on the second step I_{B} takes over and continues the primary tightening phase at the lower speed v_{1B}.

By dividing the primary tightening phase into two steps with different rotation speed there is obtained a shorter cycle time due to a high speed initial running down of the joint without increasing the risk for torque overshoot at very stiff joints.

To construct algorithms providing successive speed reductions of different characteristics within the scope of the invention and as described above is a straightforward mathematical task and can be done in several different ways.

For instance, the speed v can be determined by comparing the product of the intended target speed v₂ and the quotient of the target torque T_{F} and the actual instantaneous torque T with the v₂ value. As the actual torque T increases, the value of T_{F} / T x v₂ approaches the value of v₂, i.e. the quotient T_{F} / T gets closer to 1 and the speed is aimed at v₂.

The initial constant speed v₁ in the process illustrated in Fig.1 is determined by the maximum speed of the motor drive system and is not a result of the speed controlling algorithm. However, as the speed control value of the algorithm becomes lower than v_{1,} the speed reduction is started.

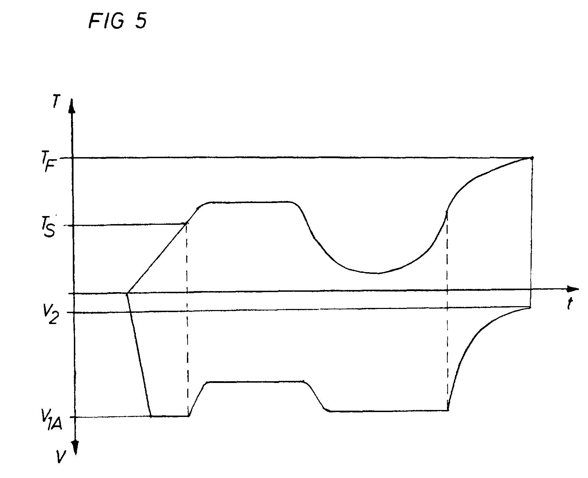

The tightening process according to the invention differs from prior art methods in a distinct way in that the rotation speed during the tightening phase is controlled in response to the actual difference between the actual instantaneous torque level T and the target torque level T_{F}. This means that should the torque resistance in the screw joint decrease during a certain interval, the rotation speed would be increased momentarily during that interval, because during that interval the difference between the actual instantaneous torque level T and the target torque level T_{F} would increase. At the end, the torque resistance will always increase to reach the target torque level T_{F}. Such a process is illustrated in Fig.5.

This successive adaptation of the rotation speed in response to the actual span between the actual instantaneous torque level T and the target torque level T_{F} gives the advantage of keeping up the tightening speed without risking an approach to the final torque level T_{F} at too a high speed.

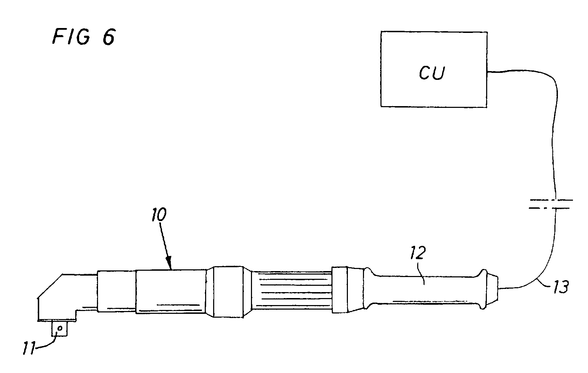

In Fig 6, there is shown by way of example an equipment for carrying out the invention. This equipment comprises a portable electric power nutrunning tool 10 having a rotating output shaft 11 and a handle 12. The tool 10 is connected to an operation control unit CU via a multi-core cable 13. The control unit CU includes means for supplying electric power to the tool 10 and a programmable means for govering the power supply to the tool 10 in respect of parameters like voltage, current and frequency.
An example of a suitable control unit is a system commercially available under the name: POWER FOCUS 2000 marketed by Atlas Copco.

## Claims

1. Process for tightening a screw joint up to a predetermined torque level (T_{F}) by means of a power tool having a torque delivering rotating output shaft and being connected to a programmable operation control unit by which the rotation speed of said output shaft is adjustable, said process comprising a primary tightening phase (I; I_{A}, I_{B}) performed at one or more substantially constant speed levels (v₁; v_{1A}, v_{1B}) and a final tightening phase (II) performed at a variable rotation speed having an average which is lower than the average of said one or more speed levels (v₁; v_{1A}, v_{1B}) of said primary tightening phase (I; I_{A}, I_{B}),
***characterized* in that** the rotation speed during said final tightening phase (II) is successively and momentarily adjusted in response to a changing relationship between the actual instantaneous torque level (T) and the target torque level (T_{F}) in a manner determined by a software programmed into said operation control unit.

2. Process according to claim 1, wherein the final rotation speed (v₂) is less than 50 % of the average of said actual speed (v₁; v_{1B}) at the end of said primary tightening phase (I; I_{A}, I_{B}).

3. Process according to claim 1 or 2, wherein the rotation speed during said final tightening phase (II) is reduced by a progressively lower rate as the deviation between the actual instantaneous torque level (T) and the target torque level (T_{F}) decreases.

4. Process according to claim 1 or 2, wherein the rotation speed during the final tightening phase (II) is reduced by a regressively lower rate as the deviation between the actual instantaneous torque level (T) and the target torque level (T_{F}) decreases.

5. Process according to claim 1 or 2, wherein the rotation speed during the final tightening phase (II) is reduced by a linearly lower rate as the deviation between the actual instantaneous torque level (T) and the target torque level (T_{F}) decreases.

6. Process according to anyone of claims 3 to 5, wherein the rotation speed during the final tightening phase (II) is temporarily increased in correspondance to a temporary increase in the deviation between the actual instantaneous torque level (T) and the target torque level (T_{F}).

7. Process according to anyone of claims 1-6, wherein said primary tightening phase (I; I_{A}, I_{B}) ends and said final tightening phase (II) begins as the actual instantaneous torque level (T) is lower than 85 % of said predetermined target torque level (T_{F}).

8. Process according to anyone of claims 1-7, wherein said primary tightening phase (I; I_{A}, I_{B}) comprises a first running down step (I_{A}) and a second preliminary tightening step (I_{B}),
said first running down step (I_{A}) being performed at a higher speed than said second preliminary tightening step (I_{B}),
said first running down step (I_{A}) ends and said second preliminary tightening step (I_{B}) starts at a predetermined torque snug level (T_{S}).

9. Process according to anyone of claims 1-8, wherein said power tool comprises an electric motor, and a drive means arranged to control the power and speed of said motor in response to the magnitude of one or more motor operation parameters, like current, frequency and voltage of said drive means representing the torque reference values for said control algorithm.

10. Process according to anyone of claims 1-8, wherein said power tool comprises an electric motor, and a drive means arranged to control the power and speed of said motor in response to the magnitude of one or more tightening parameters, like torque output, angle of rotation and rotation speed representing the reference values for said control algorithm.

## Patentansprüche

1. Verfahren zum Anziehen einer Schraubverbindung auf ein vorbestimmtes Drehmomentniveau (T_{F}) mit Hilfe eines Motorwerkzeuges, das eine Drehmoment abgebende, rotierende Ausgangswelle besitzt und mit einer programmierbaren Betriebssteuereinheit verbunden ist, mittels derer die Drehzahl der Abtriebswelle einstellbar ist, wobei das Verfahren eine anfängliche Anzugsphase (I; I_{A}, I_{B}), die mit einer oder mehreren im wesentlichen jeweils konstanten Drehzahlen (V_{I}, V_{IA}, V_{IB}) durchgeführt wird, und eine abschließende Anzugsphase (II) umfaßt, die mit einer variablen Drehzahl durchgeführt wird, deren mittlerer Wert kleiner als der mittlere Wert des einen bzw. der mehreren Drehzahlniveaus (V_{I}; V_{IA}, V_{IB}) der anfänglichen Anzugsphase (I; I_{A}, I_{B}) ist, **dadurch gekennzeichnet, daß** die Drehzahl während der abschließenden Anzugsphase (II) nach und nach und in Abhängigkeit von einem sich ändernden Verhältnis zwischen dem tatsächlichen momentanen Drehmomentniveau (T) und dem Zieldrehmomentniveau (T_{F}) in einer Weise augenblicklich eingestellt wird, die durch eine programmierte Software in der Betriebssteuereinheit bestimmt wird.

2. Verfahren nach Anspruch 1, **dadurch gekennzeichnet, daß** die abschließende Drehzahl (V₂) weniger als 50 % des Mittelwertes der tatsächlichen Drehzahl (V_{I}, V_{IB}) am Ende der anfänglichen Anzugsphase (I; I_{A}, I_{B}) beträgt.

3. Verfahren nach Anspruch 1 oder 2, **dadurch gekennzeichnet, daß** die Drehzahl während der abschließenden Anzugsphase (II) in einem niedrigeren Verhältnis progressiv verringert wird, als die Abweichung zwischen dem tatsächlichen momentanen Drehmomentniveau (T) und dem Zieldrehmomentniveau (T_{F}) abnimmt.

4. Verfahren nach Anspruch 1 oder 2, **dadurch gekennzeichnet, daß** die Drehzahl während der abschließenden Anzugsphase (II) mit einem niedrigeren Verhältnis regressiv verringert wird, als die Abweichung zwischen dem tatsächlichen momentanen Drehmomentniveau (T) und dem Zieldrehmomentniveau (T_{F}) abnimmt.

5. Verfahren nach Anspruch 1 oder 2, **dadurch gekennzeichnet, daß** die Drehzahl während der abschließenden Anzugsphase (II) mit einem niedrigeren Verhältnis linear verringert wird, als die Abweichung zwischen dem tatsächlichen momentanen Drehmomentniveau (T) und dem Zieldrehmomentniveau (T_{F}) abnimmt.

6. Verfahren nach einem der Ansprüche 3 bis 5, **dadurch gekennzeichnet, daß** die Drehzahl während der abschließenden Anzugsphase (II) zeitweise im Einklang mit einem zeitweisen Anstieg in der Abweichung zwischen dem tatsächlichen momentanen Drehmomentniveau (T) und dem Zieldrehmomentniveau (T_{F}) erhöht wird.

7. Verfahren nach einem der Ansprüche 1 bis 6, **dadurch gekennzeichnet, daß** die anfängliche Anzugsphase (I; I_{A}, I_{B}) endet und die abschließende Anzugsphase (II) beginnt, wenn das tatsächliche momentane Drehmomentniveau (T) kleiner als 85 % des vorbestimmten Zieldrehmomentniveaus (T_{F}) ist.

8. Verfahren nach einem der Ansprüche 1 bis 7, **dadurch gekennzeichnet, daß** die anfängliche Anzugsphase (I; I_{A}, I_{B}) einen ersten Eindrehschritt (I_{A}) und einen zweiten, vorläufigen Anzugsschritt (I_{B}) aufweist, wobei der erste Eindrehschritt (I_{A}) mit einer höheren Drehzahl als der zweite, vorläufige Anzugsschritt (I_{B}) durchgeführt wird und der erste Eindrehschritt (I_{A}) bei einem vorbestimmten Drehmomentsitzniveau (T_{S}) endet und der zweite, vorläufige Anzugsschritt (I_{B}) beginnt.

9. Verfahren nach einem der Ansprüche 1 bis 8, **dadurch gekennzeichnet, daß** das Motorwerkzeug einen Elektromotor und Antriebsmittel zum Steuern der Leistung und Drehzahl des Motors in Abhängigkeit von der Größe von einem oder mehreren Motorbetriebsparametern aufweist, wie z. B. Strom, Frequenz und Spannung, die die Drehmomentsbezugswerte für den Steueralgorithmus darstellen.

10. Verfahren nach einem der Ansprüche 1 bis 8, **dadurch gekennzeichnet, daß** das Motorwerkzeug einen Elektromotor und Antriebsmittel zur Steuerung der Leistung und Drehzahl des Motors in Abhängigkeit von der Größe von einem oder mehreren Anzugsparametern aufweist, wie z. B. der Drehmomentabgabe, dem Drehwinkel und der Drehzahl, die die Referenzwerte für den Steueralgorithmus darstellen.

## Revendications

1. Procédé de serrage d'un joint à vis jusqu'à un niveau de couple prédéterminé (T_{F}) au moyen d'un outil à moteur comportant un arbre de sortie rotatif de fourniture de couple, et se trouvant connecte à un bloc de commande de fonctionnement programmable qui permet de régler la vitesse de rotation de l'arbre de sortie, ce procédé comprenant une phase de serrage primaire (I ; I_{A} ; I_{B}) effectuée à un ou plusieurs niveaux de vitesse essentiellement constants (v₁ ; v_{1A}, v_{1B}) et une phase de serrage finale (II) effectuée à une vitesse de rotation variable présentant une moyenne inférieure à la moyenne du niveau ou des niveaux de vitesse (v₁ ; v_{1A}, v_{1B}) de la phase de serrage primaire (I ; I_{A}, I_{B}),
**caractérisé en ce que**
la vitesse de rotation pendant la phase de serrage finale (II) est réglée successivement et momentanément en réponse à un changement de relation entre le niveau de couple instantané réel (T) et le niveau de couple visé (T_{F}), d'une manière déterminée par un logiciel programmé dans le bloc de commande de fonctionnement.

2. Procédé selon la revendication 1,
dans lequel
la vitesse de rotation finale (v₂) est inférieure à 50 % de la moyenne de la vitesse réelle (v₁ ; v_{1B}) à la fin de la phase de serrage primaire (I ; I_{A}, I_{B}).

3. Procédé selon la revendication 1 ou 2,
dans lequel
la vitesse de rotation pendant la phase de serrage finale (II) est réduite à un taux progressivement plus bas lorsque l'écart entre le niveau de couple instantané réel (T) et le niveau de couple visé (T_{F}) diminue.

4. Procédé selon la revendication 1 ou 2,
dans lequel
la vitesse de rotation pendant la phase de serrage finale (II) est réduite à un taux progressivement plus bas lorsque l'écart entre le niveau de couple instantané réel (T) et le niveau de couple visé (T_{F}) diminue.

5. Procédé selon la revendication 1 ou 2,
dans lequel
la vitesse de rotation pendant la phase de serrage finale (II) est réduite à un taux linéairement plus bas lorsque l'écart entre le niveau de couple instantané réel (T) et le niveau de couple visé (T_{F}) diminue.

6. Procédé selon l'une quelconque des revendications 3 à 5,
dans lequel
la vitesse de rotation pendant la phase de serrage finale (II) est momentanément augmentée en correspondance avec une augmentation temporaire de l'écart entre le niveau de couple instantané réel (T) et le niveau de couple visé (T_{F}).

7. Procédé selon l'une quelconque des revendications 1 à 6,
dans lequel
la phase de serrage primaire (I ; I_{A}, I_{B}) se termine et la phase de serrage finale (II) débute lorsque le niveau de couple instantané réel (T) est inférieur à 85 % du niveau de couple visé prédéterminé (T_{F}).

8. Procédé selon l'une quelconque des revendications 1 à 7,
dans lequel
la phase de serrage primaire (I ; I_{A}, I_{B}) comprend une première étape de vissage rapide (I_{A}) et une seconde étape de serrage préliminaire (I_{B}),
la première étape de vissage rapide (I_{A}) étant effectuée à une vitesse plus élevée que celle de la seconde étape de serrage préliminaire (I_{B}),
la première étape de vissage rapide (I_{A}) se terminant et la seconde étape de serrage préliminaire (I_{B}) débutant à un niveau de couple confortable prédéterminé (T_{F}).

9. Procédé selon l'une quelconque des revendications 1 à 8,
dans lequel
l'outil à moteur comprend un moteur électrique et des moyens d'entraînement disposés pour commander la puissance et la vitesse du moteur en réponse à l'amplitude d'un ou plusieurs paramètres de fonctionnement du moteur tels que le courant, la fréquence et la tension des moyens d'entraînement, représentant les valeurs de référence de couple pour l'algorithme de commande.

10. Procédé selon l'une quelconque des revendications 1 à 8,
dans lequel
l'outil à moteur comprend un moteur électrique et des moyens d'entraînement disposés pour commander la puissance et la vitesse du moteur en réponse à l'amplitude d'un ou plusieurs paramètres de serrage tels que le couple de sortie, l'angle de rotation et la vitesse de rotation, représentant les valeurs de référence pour l'algorithme de commande.
